# EUROPEAN PATENT APPLICATION

(11) **EP 4 353 862 A1**
(43) Date of publication of application: **17.04.2024**
(21) Application number: 22819500.4
(22) Date of filing: 07.06.2022
(51) Int. Cl.: C23C 2/06, C21D 1/26, C21D 9/56, C23C 2/40, C22C 38/06

(54) **HOT-DIP GALVANIZED STEEL PLATE AND MANUFACTURING METHOD THEREFOR**

(30) Priority: 07.06.2021 CN 202110633247
(71) Applicant: BAOSHAN IRON & STEEL CO., LTD., Shanghai 201900 (CN)
(72) Inventor: ZHONG, Yong, Shanghai 201900 (CN); CHEN, Mengxiao, Shanghai 201900 (CN); WANG, Li, Shanghai 201900 (CN)
(74) Representative: Kuhnen & Wacker Patent- und Rechtsanwaltsbüro PartG mbB
(86) International application number: PCT/CN2022/097291
(87) International publication number: WO 2022/257902

(57) **Abstract**

Provided are a manufacturing method for a hot-dip galvanized steel plate, and the hot-dip galvanized steel plate. The method comprises: hot rolling a slab into a steel plate, and pickling and cold rolling after coiling; performing continuous annealing, an annealing temperature being 840-870°C, and an annealing dew point being -10-0°C; cooling to 710-730°C at a cooling rate of ≤10°C/s, and then cooling to 220-320°C at a cooling speed of ≥50°C/s; then heating to 410-460°C for heat preservation for 20-100 s; and galvanization to obtain the hot-dip galvanized steel plate, the chemical element composition thereof being: C: 0.17-0.21wt%; Si: 1.2-1.7wt%; Al: 0.02-0.05%; Mn: 1.60-2.1wt%; N: ≤0.008wt%; and the reminder being Fe and impurities. The hot-dip galvanized steel plate of the present invention has a yield strength of 400-600 Mpa, a tensile strength of 730-900 Mpa, an elongation of 25-35%, and a hole expansion ratio of 35-60%.

## Description

### Technical Field

The present disclosure relates to a metallic material and a method of manufacturing the same, particularly to a hot-dip galvanized steel and a method of manufacturing the same.

### Background Art

It's estimated that when the weight of an automobile is reduced by 10%, fuel consumption can be saved by 5% to 8%, while the emission of CO₂, which is a greenhouse gas, and pollutants such as NOₓ, SO₂ and the like can be reduced accordingly. As the main raw material of a bodywork, the steel plate in an automobile accounts for about 60 to 70% of the weight of the bodywork. Therefore, increasing the strength of steel plate so as to reduce the thickness of steel plate is a trend of the development of steel plates in recent years. However, due to the limitation of the metallurgical mechanism, an increase in the strength of conventional high-strength steel generally leads to a decrease in plasticity, which limits the use of the high-strength steel in complex-shaped automotive structural parts. High formability TRIP steel, which benefits from phase transformation strengthening of metastable austenite as the main strengthening mechanism, overcomes the traditional contradiction between ultra-high strength and high formability, and shows a good prospect of use as a bodywork structural material. The development and application thereof have become a hot subject of research in major steel enterprises and automotive enterprises around the world.

TRIP steel (Transformation Induced Plasticity Steel) is formed by introducing a certain amount of metastable austenite into the martensitic or bainitic structure, so as to achieve both high strength and high plasticity through the dynamic phase transformation of the metastable austenite. However, due to the complex structure and high work hardening ability of the existing TRIP steel, especially the large difference in hardness between the soft phase and the hard phase under the existing material design and process characteristics, the local deformation ability of the high-strength TRIP steel under pre-damage conditions is poor, which is specifically reflected by the significantly worsened flanging and hole expansion performances as compared with conventional ultra-high-strength steel. For example, the hole expansion ratio of 780 MPa grade dual-phase steel (DP) is more than 30%, while TRIP steel of the same grade is only 10-15%. The forming process of automobile parts usually involves a variety of forming modes. In addition to the common drawing and bulging related to the overall forming performance, there are also flanging, hole expansion, bending and other forming modes related to the local forming performance. The low hole expansion ratio limits the use of TRIP steel in a large number of parts, the forming of which involves flanging and hole expansion. It severely restricts the utilization of the high plasticity performance of TRIP steel, and also restricts the application and promotion of TRIP steel in manufacturing of auto parts.

There are many patents related to the manufacturing methods of high-strength TRIP steel in the prior art. However, in order to ensure the overall formability of the steel plate, these patents tend to design a structure of soft phase + hard phase + metastable austenite. Although the elongation is significantly improved as compared with that of the traditional steel plate of the same grade, the large hardness difference between different phase components in the multi-phase composite structure is prone to cause mismatch of soft phase deformation and hard phase deformation during local deformation, thereby leading to phase interface cracking, which damages the local forming performance of the material such as flanging, hole expansion, cold bending and the like.

In addition, compared with ordinary cold-rolled steel plate products, hot-dip galvanized products have been widely used in automobiles because of their much better corrosion resistance. They can amount to more than 80% on average, and even 100% in some vehicle models. However, TRIP steel requires addition of a relatively large amount of alloying elements, such as Si, Al, and Mn, to obtain metastable austenite with sufficient stability and a sufficient volume fraction. Due to the active chemical properties of these elements, surface oxidation is prone to occur during a heat treatment process. Surface oxidation results in a decrease in plateability, making it difficult to achieve stable manufacturing of hot-dip galvanized products with high plating layer quality. Therefore, in order to improve the plateability of steel, low Si and Mn contents are designed in most cases. However, Si and Mn are the most effective and cheapest strengthening elements in steel. The design of low Si and Mn contents leads to a decrease in the performances of the steel. Therefore, expensive alloying elements such as Cr, Mo, and Nb need to be used for compensation. Thus, the cost of the steel is increased, and the manufacturability of the product may also be reduced.

The following related patents were found in novelty search:
JP 2010255097 discloses a high-strength hot-dip galvanized steel plate with excellent workability and a manufacturing method thereof. It is characterized in that the composition comprises, in terms of mass%, C: 0.04 to 0.15%, Si: 0.7 to 2.3%, Mn: 0.8 to 2.2%, P: <0.1%, S: less than 0.01%, Al: < 0.1%, N: less than 0.008%, and a balance of iron and unavoidable impurities. The structure consists of 70% or more of ferrite phase, 2% or more and 10% or less of bainite phase, 0% or more and 12% or less of pearlite phase, and 1% or more and 8% or less of retained austenite phase. The average grain size of ferrite is 18 µm or less, and the average grain size of retained austenite is 2 µm or less. The steel of this invention has a tensile strength of 590 MPa or more and has excellent workability (ductility and hole expandability). However, the tensile strength of the steel of this invention is only 600-700 MPa, which cannot meet the requirement of ultra-high-strength steel.

WO 2020151856 A1 discloses a 1380 MPa grade cold-rolled ultra-high-strength steel and a manufacturing method thereof. It is characterized in that the mass percentages of the components are: C: 0.15 to 0.25%, Si: 0.7 to 1.6%, Mn: 2.2 to 3.2%, Mo: ≤0.2%, Cr: ≤0.8%, Al: 0.03 to 1.0%, Nb/V: ≤0.04%, Ti: 0.01 to 0.04%, B: 0.001 to 0.005%, Cu: ≤0.15%, Ni: ≤0.15%, Ca: ≤0.01%, and a balance of Fe and unavoidable impurities. The invention involves a multi-phase structure, including 40% or more of tempered martensite, 40% or less of bainite, 20% or less of fresh martensite, and 2 to 20% of retained austenite. The hole expansion ratio of this invention reaches 40% or more, but the elongation is only 5%, which cannot meet the high formability requirement of complex parts.

WO 2020128574 A1 discloses a hot-dip galvanized ultra-high-strength steel with a tensile strength of 1470 MPa or more and a manufacturing method thereof. It is characterized in that the mass percentages of the components are: C: 0.3 to 0.4%, Si: 0.8 to 1.60%, Mn: 2.0 to 4.0%, Al: 0.01 to 0.6%, Mo: 0.15 to 0.50%, Cr: 0.3 to 1.0%, Ti: ≤0.06%, Nb: ≤0.06%, V: ≤0.2%, Ni: ≤0.8%, B: 0.0003 to 0.0005%, and a balance of Fe and unavoidable impurities. The microstructure of the steel consists of 15 to 30% retained austenite with a carbon content of not less than 0.7%, 70 to 85% tempered martensite and 5% fresh martensite. This invention can achieve a tensile strength of 1470 MPa or more, an elongation of 13% or more, a hole expansion ratio of 15% or more, and an LME index of 0.7 or less. The carbon content of the steel of this invention is very high, and a considerable amount of Nb, V, and Ti alloy elements need to be added, which not only greatly increases the material cost, but also increases the difficulty in casting, hot rolling, and welding in the manufacturing. At the same time, the hole expansion ratio of the material is not high, which also seriously limits the application of this type of products.

CN 109023053 B discloses a 600MPa grade multi-phase steel plate with good flanging performance. Its components are: C: 0.060 to 0.100%, Si: 0.060 to 0.400%, Mn: 1.20 to 2.00%, P: 0.020% or less, S: 0.010% or less, Al: 0.015 to 0.070%, Cr: 0.15 to 0.35%, Ti: 0.010 to 0.035%, Nb: 0.010 to 0.035%, N: 0.006% or less. The production process of this steel includes: conventional smelting of the composition and casting; performing the hot rolling process; performing the cold rolling process; naturally cooling to room temperature for later use. The yield strength of the steel of this invention reaches 360 to 440 MPa; the tensile strength is 600 to 700 MPa; the elongation is 19% or more; and the hole expansion ratio is 45% or more. Its microstructure comprises pearlite, bainite, ferrite and a small amount of martensite and retained austenite, thus ensuring that while having high strength, it also has good formability, flanging performance and collision energy absorption performance. The steel of this invention has a good hole expansion ratio and a good elongation, but the steel grade is low and the tensile strength is only 600 MPa, which cannot meet the high-strength and thinnability required by automobiles.

WO 2013144376 A1 discloses a cold-rolled ultra-high-strength steel for automobiles. Its components include: C: 0.1 to 0.3%, Si: 0.4 to 1.0%, Mn: 2.0 to 3.0%, Nb: ≤0.01. The steel comprises a multi-phase structure, including 5 to 20% of retained austenite, 80% or more of bainite/bainite ferrite/tempered martensite, and 10% or less of polygonal ferrite. It has a tensile strength of 980 MPa or more, an elongation of 4% or more, a hole expansion ratio of 20% or more, a strength-elongation product of 13000%MPa or more, and a hole expansion ratio-strength product of 40000%MPa or more. The steel of this invention has a high strength, but its elongation and hole expansion ratio are not high. Its formability is poor, and it cannot meet the requirements for forming complex parts.

### Summary

In order to solve the problems that the high-strength hot-dip galvanized steel plates manufactured by the existing technologies have poor plating layer quality, and are prone to phase interface cracking caused by mismatch of soft phase deformation and hard phase deformation during local deformation, thereby damaging the flanging, hole expansion, cold bending and other local forming properties of the material, the present disclosure provides a method of manufacturing a hot-dip galvanized steel plate. This method can be used to manufacture a hot-dip galvanized steel plate with high strength, good plating layer quality, and excellent local formability. The steel plate is suitable for automobile structural parts and safety parts demanding high corrosion resistance.

The method of manufacturing a hot-dip galvanized steel plate provided by the present disclosure includes the following steps:
S1: hot rolling a slab into a steel plate, coiling the steel plate, and then pickling and cold-rolling the steel plate;
S2: performing continuous annealing at an annealing temperature of 840 to 870 °C and an annealing dew point of -10 to 0 °C; slow cooling at a cooling rate of ≤10 °C/s to a starting temperature of rapid cooling of 710 to 730 °C; rapid cooling at a cooling rate of ≥50 °C/s to an end temperature of the rapid cooling of 220 to 320 °C; heating to a reheating temperature of 410 to 460 °C; and keeping the reheating temperature for 20 to 100 s;
S3: performing galvanization, after which the steel plate is cooled to room temperature to obtain a hot-dip galvanized steel plate;
wherein the hot-dip galvanized steel plate consists of the following chemical elements by mass percentage: C: 0.17 to 0.21 wt%; Si: 1.2 to 1.7 wt%; Al: 0.02 to 0.05%; Mn: 1.60 to 2.1 wt%; N: ≤ 0.008 wt%; and a balance of Fe and unavoidable impurities.

In the above technical solution, continuous annealing is adopted as the annealing process, and a weak oxidizing atmosphere with an annealing dew point of -10 to 0 °C is employed in the annealing process to cause internal oxidation of the subsurface of the steel plate, thereby preventing enrichment of Si and Mn elements to the surface, inhibiting generation of a Si/Mn oxide film on the surface, so as to prevent a decrease in plateability caused by surface oxidation. Moreover, it is found in experiments that when the annealing dew point is -10 to 0 °C, the plating layer quality of the hot-dip galvanized steel plate is better. The annealing temperature is set at a relatively high temperature of 840 to 870 °C to form a uniform austenite structure, which is beneficial to improve the strength of the steel. The steel plate is slowly cooled at a cooling rate of ≤10 °C/s to the starting temperature of the rapid cooling, i.e. 710-730°C, to form some ferrite, and reduce the temperature difference of the rapid cooling to improve the plate shape. The steel plate is then rapidly cooled at ≥50 °C/s to the end temperature of the rapid cooling, i.e. a temperature between 220 and 320 °C, so that the austenite is partially transformed into partitioned martensite. The steel plate is then heated to the reheating temperature of 410 to 460 °C and held for 20 to 100 s. During this course, carbon is distributed from the partitioned martensite to the austenite, thereby depleting carbon in the partitioned martensite and reducing the hardness, while enriching carbon in the austenite which is stabilized. At the same time, the ferrite recovers and the hardness increases. Finally, galvanization is performed to obtain the hot-dip galvanized product with high plating layer quality.

During the continuous annealing and galvanization processes, carbon element is redistributed between the partitioned martensite and austenite, which makes the austenite rich in carbon and more stable, thereby producing more metastable austenite which is beneficial to increase plasticity. More importantly, the carbon content in the partitioned martensite is reduced, thereby effectively reducing the hardness of the partitioned martensite on condition that the partitioned martensite is not tempered. The ferrite in the microstructure recovers during the annealing and galvanization processes, which greatly reduces the high-density glissile dislocations produced in the ferrite by the volume expansion of the partitioned martensite in phase transformation, thus improving the hardness of the ferrite. The reduced hardness of the partitioned martensite and the increased hardness of the ferrite effectively reduce the hardness difference between the partitioned martensite phase and the ferrite phase, and thus improve the hole expansion and flanging performances of the material. According to the traditional processes, it is usually necessary to generate tempered partitioned martensite to reduce the hardness of the partitioned martensite. That is, the supersaturated carbon in the partitioned martensite dissolves and forms carbides at the tempering temperature. In such processes, the effective carbon content in the material is reduced due to the generation of a large amount of carbides which cannot be used to stabilize the retained austenite. The manufacturing process of the present disclosure achieves reduction of the hardness of the partitioned martensite, but avoids tempering of the partitioned martensite. Therefore, no carbides are generated. The manufacturing process makes full use of the alloying elements in the material, and is a cost-effective design. Owing to the design of a high Si content, the metastable austenite in the steel will substantially not decompose during the galvanization process, so that it's ensured that the required structure is finally obtained.

The final microstructure of the hot-dip galvanized steel plate manufactured by the method of manufacturing the hot-dip galvanized steel plate provided by the present disclosure consists of ferrite, partitioned martensite and metastable austenite. The dynamic phase transformation of the metastable austenite, in cooperation with the soft phase ferrite and the hard phase martensite, imparts the advantages of high strength and high plasticity to the hot-dip galvanized steel plate. According to another specific embodiment of the present disclosure, the microstructure of the hot-dip galvanized steel plate prepared by the method of manufacturing the hot-dip galvanized steel plate provided by the present disclosure consists of ferrite, partitioned martensite and metastable austenite; wherein, by volume fraction, the phase proportion of the ferrite is 30 to 50%; the phase proportion of the partitioned martensite is 40 to 60%; and the phase proportion of the metastable austenite is 10 to 20%.

According to another specific embodiment of the present disclosure, in the method of manufacturing the hot-dip galvanized steel plate provided by the present disclosure, the statistical stored dislocation (SSD) density of the ferrite is 5.0×10¹³/m² to 1×10¹⁴/m²; the hardness of the ferrite is 180 to 230 HV; the hardness of the partitioned martensite is 315 to 380 HV, preferably 320 to 380 HV; and the hardness ratio of the partitioned martensite to the ferrite is ≤1.8. In some embodiments, the hardness ratio of the partitioned martensite to the ferrite is 1.4 to 1.8.

With the use of the above technical solution, the hot-dip galvanized steel plate manufactured by the method of manufacturing the hot-dip galvanized steel plate provided by the present disclosure has high strength and high hole expandability. According to a specific embodiment of the present disclosure, the hot-dip galvanized steel plate obtained by the method of manufacturing the hot-dip galvanized steel plate provided by the present disclosure has a yield strength of 400 to 600 MPa, a tensile strength of 730 to 900 MPa, preferably 780 to 900 MPa, an elongation of 25 to 35%, and a hole expansion ratio of 35 to 60%.

According to another specific embodiment of the present disclosure, in the method of manufacturing the hot-dip galvanized steel plate provided by the present disclosure, before the hot rolling, the slab is heated and held at a temperature of 1230 to 1260°C.

In some embodiments, the steel plate is slowly cooled at a slow cooling rate of 2 to 10 °C/s to the starting temperature of the rapid cooling of 710 to 730 °C. In some embodiments, the steel plate is rapidly cooled at a rapid cooling rate of 50 to 100 °C/s to the end temperature of the rapid cooling of 220 to 320 °C.

Preferably, a high-temperature heating furnace is used for holding the temperature, because it can facilitate full dissolution of C and N compounds and avoid generation of spinellike oxide scale that is difficult to remove.

According to another specific embodiment of the present disclosure, in step S 1 of the method of manufacturing the hot-dip galvanized steel plate provided by the present disclosure, the finish rolling temperature of the hot rolling is 920±30 °C.

In the present disclosure, the use of a high finish rolling temperature is beneficial to ensure that the steel plate is completely in an austenite state without any phase transformation before cooling.

According to another specific embodiment of the present disclosure, in step S 1 of the method of manufacturing the hot-dip galvanized steel plate provided by the present disclosure, during the coiling, the temperature is 450 to 550 °C; during the cold rolling, the cold-rolling deformation amount is 20 to 60%.

In the present disclosure, the use of a low coiling temperature is beneficial to reduce eutectoid reaction due to oxide scale, and prevent reduction of pickling efficiency and surface quality.

The method of manufacturing the hot-dip galvanized steel plate provided by the present disclosure improves the strength of the hot-dip galvanized steel plate through the smelting, hot rolling, cold rolling, continuous annealing and galvanization processes on the basis of the high Si and Mn contents, and imparts good elongation to it. A microstructure with appropriate ferrite hardness and partitioned martensite hardness is formed, thereby improving the hole expansion performance. At the same time, the steel plate has good plating layer quality, which can meet the requirements of hot-dip galvanized ultra-high-strength steel for automobiles.

The present disclosure further provides a hot-dip galvanized steel plate manufactured by the method of manufacturing a hot-dip galvanized steel plate provided by the present disclosure. The hot-dip galvanized steel plate consists of the following chemical elements by mass percentage: C: 0.17 to 0.21 wt%; Si: 1.2 to 1.7 wt%; Al: 0.02 to 0.05%; Mn: 1.60 to 2.1 wt%; N: ≤ 0.008 wt%; and a balance of Fe and unavoidable impurities. The microstructure of the hot-dip galvanized steel plate consists of ferrite, partitioned martensite and metastable austenite, wherein the phase proportion of the ferrite is 30 to 50%; the phase proportion of the partitioned martensite is 40 to 60%; and the phase proportion of the metastable austenite is 10 to 20%.

The reasons for selecting the chemical components of the hot-dip galvanized steel plate of the present disclosure in the above ranges are as follows:
C: It is the most fundamental strengthening element in steel, and also an austenite stabilizing element. A higher C content in austenite is beneficial to increase the fraction of metastable austenite and improve material properties. However, an unduly high C content will deteriorate the weldability of steel. Therefore, in order to achieve the desired effect, the C content in the present disclosure is controlled in the range of 0.17 to 0.21 wt%.
Si: It is an element that inhibits formation of carbides. Its solubility in carbides is very small. It can effectively inhibit or delay formation of carbides. It is beneficial to inhibit decomposition of austenite during the hot-dip galvanization process. As a result, carbon-rich austenite is formed during the partition process, and remains as metastable austenite till room temperature. However, an unduly high Si content will reduce the platability of the material. Therefore, the Si content in the present disclosure is controlled in the range of 1.2 to 1.7 wt%. The platability of the hot-dip galvanized steel plate during manufacturing is improved to ensure the quality of galvanization.
Mn: It is an austenite stabilizing element. The presence of Mn can decrease the transformation temperature of partitioned martensite and increase the content of metastable austenite. In addition, Mn is a solid solution strengthening element, and it is beneficial to improve the strength of the steel plate. However, an unduly high Mn content will lead to excessively high hardenability of steel, which is not conducive to delicate control of the material structure. In addition, similar to the influence of Si, high Mn will also reduce the platability of the steel plate. Therefore, the Si content in the present disclosure is controlled in the range of 1.2 to 1.7 wt%. The platability of the hot-dip galvanized steel plate during manufacturing is improved to ensure the quality of galvanization.
Al: Similar to Si, its main functions include solid solution strengthening, inhibiting formation of carbides, and improving the stability of metastable austenite. Nevertheless, the strengthening effect of Al is weaker than that of Si. In the present disclosure, the Al content is controlled in the range of 0.02% to 0.05%.
N: In order to reduce the adverse impact of N on inclusion control, N is minimized for smelting, i.e., ≤0.008 wt%.

The final microstructure of the hot-dip galvanized steel plate of the present disclosure consists of 30 to 50% ferrite, 40 to 60% partitioned martensite, and 10 to 20% metastable austenite, so that the hot-dip galvanized steel plate has the advantages of high strength and high plasticity.

According to another specific embodiment of the present disclosure, in the hot-dip galvanized steel plate provided by the present disclosure, the statistical stored dislocation (SSD) density of the ferrite is 5.0×10¹³/m² to 1×10¹⁴/m²; the hardness of the ferrite is 180 to 230 HV; the hardness of the partitioned martensite is 315 to 380 HV, preferably 320 to 380 HV; and the hardness ratio of the partitioned martensite to the ferrite is ≤1.8.

According to another specific embodiment of the present disclosure, the hot-dip galvanized steel plate provided by the present disclosure has a yield strength of 400 to 600 MPa, a tensile strength of 730 to 900 MPa, preferably 780 to 900 MPa, an elongation of 25 to 35%, and a hole expansion ratio of 35 to 60%.

The hot-dip galvanized steel plate obtained by the manufacturing method provided by the present disclosure has the advantages of high Si and Mn contents, good plating layer quality, good local formability, and high strength. It has a good prospect of application in automobile safety parts and structural parts. It's especially suitable for manufacturing vehicle structural parts and safety parts having relatively complex shapes and high requirements on overall formability, local formability and corrosion resistance, such as reinforced side panels, energy-absorbing boxes, and A and B pillars.

### Description of the Drawings

Fig. 1 shows the result of flanging the hot-dip galvanized steel plate product manufactured by the method of manufacturing a hot-dip galvanized steel plate in Example 1 of the present disclosure.
Fig. 2 shows the result of flanging the hot-dip galvanized steel plate product manufactured by the method of manufacturing a hot-dip galvanized steel plate in Comparative Example 1.
Fig. 3 shows the test result of the bonding strength of the zinc layer of the hot-dip galvanized steel plate product manufactured by the method of manufacturing a hot-dip galvanized steel plate in Example 1 of the present disclosure.
Fig. 4 shows the test result of the bonding strength of the zinc layer of the hot-dip galvanized steel plate product manufactured by the method of manufacturing a hot-dip galvanized steel plate in Comparative Example 1.

### Detailed Description

For the sake of the following detailed description, it is to be understood that, except in any operating examples, or unless otherwise specified, all numerical values indicating, for example, amounts of components used in the specification and claims are to be understood in all cases to be modified by the term "about". Accordingly, unless otherwise specified, the numerical parameters set forth in the following specification and the appended claims are approximations that will vary depending upon the properties desired to be obtained by the present application. At the very least, there is no attempt to limit the application of the doctrine of equivalents to the scope of the claims. Instead, each numerical parameter should at least be interpreted in light of the number of the reported significant digits and by applying ordinary rounding techniques.

The terms used in the present application are only for the purpose of describing particular embodiments, and should not to be construed as limiting. As used herein, the singular forms "a", "an" and "the" are intended to include the plural forms as well, unless expressly specified otherwise in the context. Expressions, such as "at least one", preceding or following a list of elements modify the entire list of elements, not the individual elements in the list.

Further, the terms "including" and "comprising" used in the present application, when used in this specification, indicate the presence of the stated features, regions, integers, steps, operations, elements, and/or components, but do not exclude the presence or addition of one or more additional features, regions, integers, steps, operations, elements, components, and/or mixtures thereof.

"About" or "approximately" used in the present application includes the stated value, and means, for example, that one of ordinary skill in the art would determine the acceptable deviation range for a specific value by considering the measurement of interest and the error associated with the measurement of the particular quantity (i.e., limitations of the measurement system). Unless otherwise specified, all parameter ranges disclosed include the endpoint values and all values therebetween.

In the description of the present disclosure, unless otherwise specified, the terms have the same meanings as one of ordinary skill in the art generally understands; if there is difference, the definitions in the present disclosure shall prevail. Unless otherwise specified, the test methods are conventional methods. Unless otherwise specified, the raw materials and test materials used in the present disclosure are all commercially available.

In order to make the purposes, technical solutions and advantages of the present disclosure clearer, the method of manufacturing the hot-dip galvanized steel plate of the present disclosure will be further described below with reference to Examples 1-5 as preferred embodiments, but the present disclosure is not limited by the following Examples. In addition, the present disclosure further illustrates the technical effects of the present disclosure through Comparative Examples 1-3 that are different from the method of manufacturing the hot-dip galvanized steel plate of the present disclosure.

### Example 1

S1: a conventional steel production line or a thin slab continuous casting and rolling production line was used for production. After continuous casting, a slab was obtained. The slab was heated and held at 1250 °C; and then hot rolled into a steel plate of a certain thickness. The thickness was determined according to the required thickness of the final product. The finish rolling temperature was 920 °C. The steel plate was coiled at 500 °C, pickled and cold rolled. The cold rolling deformation amount was 40%.

S2: continuous annealing was performed, wherein the annealing temperature was controlled and the annealing dew point was adopted at the annealing stage. The steel plate was cooled at a cooling rate of ≤10 °C/s to the starting temperature of rapid cooling, and then rapidly cooled at a cooling rate of ≥50 °C/s to the end temperature of the rapid cooling. Then, the steel plate was heated to the reheating temperature and held for a certain period of time. See Table 1 for the specific parameters.

S3: The steel plate was delivered into a zinc pot to complete galvanization; and it was finally cooled to room temperature.

The contents of C, Si, Mn, Al, and N among the chemical elements of the hot-dip galvanized steel plate are shown in Table 2, wherein the balance is Fe and unavoidable impurities.

### Example 2

S1: a conventional steel production line or a thin slab continuous casting and rolling production line was used for production. After continuous casting, a slab was obtained. The slab was heated and held at 1260 °C; and then hot rolled into a steel plate of a certain thickness. The thickness was the same as that in Example 1. The finish rolling temperature was 930 °C. The steel plate was coiled at 450 °C, pickled and cold rolled. The cold rolling deformation amount was 20%.

S2: continuous annealing was performed. See Table 1 for the specific parameters.

S3: The steel plate was delivered into a zinc pot to complete galvanization; and it was finally cooled to room temperature.

The contents of C, Si, Mn, Al, and N among the chemical elements of the hot-dip galvanized steel plate are shown in Table 2, wherein the balance is Fe and unavoidable impurities.

### Example 3

S1: a conventional steel production line or a thin slab continuous casting and rolling production line was used for production. After continuous casting, a slab was obtained. The slab was heated and held at 1230 °C; and then hot rolled into a steel plate of a certain thickness. The thickness was the same as that in Example 1. The finish rolling temperature was 950 °C. The steel plate was coiled at 550 °C, pickled and cold rolled. The cold rolling deformation amount was 60%.

S2: continuous annealing was performed. See Table 1 for the specific parameters.

S3: The steel plate was delivered into a zinc pot to complete galvanization; and it was finally cooled to room temperature.

The contents of C, Si, Mn, Al, and N among the chemical elements of the hot-dip galvanized steel plate are shown in Table 2, wherein the balance is Fe and unavoidable impurities.

### Example 4

S1: a conventional steel production line or a thin slab continuous casting and rolling production line was used for production. After continuous casting, a slab was obtained. The slab was heated and held at 1240 °C; and then hot rolled into a steel plate of a certain thickness. The thickness was the same as that in Example 1. The finish rolling temperature was 890 °C. The steel plate was coiled at 470 °C, pickled and cold rolled. The cold rolling deformation amount was 50%.

S2: continuous annealing was performed. See Table 1 for the specific parameters.

S3: The steel plate was delivered into a zinc pot to complete galvanization; and it was finally cooled to room temperature.

The contents of C, Si, Mn, Al, and N among the chemical elements of the hot-dip galvanized steel plate are shown in Table 2, wherein the balance is Fe and unavoidable impurities.

### Example 5

S1: a conventional steel production line or a thin slab continuous casting and rolling production line was used for production. After continuous casting, a slab was obtained. The slab was heated and held at 1250 °C; and then hot rolled into a steel plate of a certain thickness. The thickness was the same as that in Example 1. The finish rolling temperature was 900 °C. The steel plate was coiled at 520 °C, pickled and cold rolled. The cold rolling deformation amount was 30%.

S2: continuous annealing was performed. See Table 1 for the specific parameters.

S3: The steel plate was delivered into a zinc pot to complete galvanization; and it was finally cooled to room temperature.

The contents of C, Si, Mn, Al, and N among the chemical elements of the hot-dip galvanized steel plate are shown in Table 2, wherein the balance is Fe and unavoidable impurities.

### Comparative Example 1

S1: a conventional steel production line or a thin slab continuous casting and rolling production line was used for production. After continuous casting, a slab was obtained. The slab was hot rolled into a steel plate. The finish rolling temperature was 850 °C. The steel plate was coiled at 400 °C, pickled and cold rolled.

S2: annealing was performed. See Table 1 for the specific parameters.

S3: galvanization was completed. The steel plate was cooled to room temperature.

The contents of the chemical elements are shown in Table 2. The contents of the chemical components were within the ranges of the chemical contents in the manufacturing method of the present disclosure, wherein the contents of Si, Mn were relatively high.

### Comparative Example 2

S1: a conventional steel production line or a thin slab continuous casting and rolling production line was used for production. After continuous casting, a slab was obtained. The slab was hot rolled into a steel plate. The finish rolling temperature was 850 °C. The steel plate was coiled at 400 °C, pickled and cold rolled.

S2: annealing was performed. See Table 1 for the specific parameters.

S3: galvanization was completed. The steel plate was cooled to room temperature.

The contents of the chemical elements are shown in Table 2. The contents of the chemical components were different from the chemical contents required by the manufacturing method of the present disclosure, wherein the contents of C, Mn were relatively low.

### Comparative Example 3

S1: a conventional steel production line or a thin slab continuous casting and rolling production line was used for production. After continuous casting, a slab was obtained. The slab was heated and held at 1162 to 1189 °C; and then hot rolled into a steel plate. The finish rolling temperature was 862 to 882 °C. The steel plate was coiled at 571 to 590 °C, pickled and cold rolled.

S2: continuous annealing was performed, wherein the annealing temperature was controlled at 835 to 847 °C. The starting temperature of rapid cooling was 626 to 639 °C; the end temperature of the rapid cooling was 385 to 395 °C; and the reheating temperature was 310 to 346 °C.

S3: galvanization was completed. The steel plate was cooled to room temperature naturally.

The contents of the chemical elements are shown in Table 2. The contents of the chemical components were different from the chemical contents required by the manufacturing method of the present disclosure. The contents of C, Si, Mn, Al were all relatively low, but Cr, Nb and Ti were added.

The parameters of the annealing process of Examples 1-5 and Comparative Examples 1-3 are shown in Table 1, and the contents of the chemical components in Examples 1-5 and Comparative Examples 1-3 are shown in Table 2.

**Table 1**

| | | Annealing temperatur e/°C | Annealin g dew point/°C | Slow cooling rate °C/s | Starting temperature of rapid cooling/°C | Rapid cooling rate °C/s | End temperature of rapid cooling/°C | Reheating temperature/ °C | Holding time (s) |
|---|---|---|---|---|---|---|---|---|---|
| Ex. 1 | i | 840 | -8 | 7 | 710 | 96 | 250 | 420 | 70 |
| | ii | 860 | -1 | 4 | 720 | 50 | 220 | 440 | 50 |
| | iii | 870 | -5 | 9 | 720 | 81 | 250 | 420 | 60 |
| Ex. 2 | i | 860 | -7 | 10 | 720 | 70 | 260 | 400 | 90 |
| | ii | 850 | -10 | 6 | 710 | 85 | 250 | 410 | 70 |
| | iii | 840 | -2 | 5 | 730 | 77 | 240 | 460 | 40 |
| Ex. 3 | i | 860 | 0 | 6 | 700 | 72 | 260 | 450 | 20 |
| | ii | 870 | -3 | 8 | 710 | 61 | 260 | 430 | 60 |
| | iii | 840 | -8 | 2 | 720 | 96 | 220 | 410 | 80 |
| Ex. 4 | i | 860 | -4 | 7 | 720 | 57 | 200 | 400 | 90 |
| | ii | 860 | -6 | 5 | 710 | 61 | 320 | 450 | 70 |
| | iii | 850 | -9 | 7 | 700 | 70 | 280 | 420 | 70 |
| Ex. 5 | i | 870 | -1 | 8 | 710 | 54 | 220 | 410 | 100 |
| | ii | 840 | -1 | 8 | 720 | 55 | 230 | 420 | 80 |
| | iii | 850 | -5 | 4 | 730 | 64 | 220 | 430 | 70 |
| Comp. Ex. 1 | | 780 | -35 | | 700 | | 410 | 410 | 35 |
| Comp. Ex. 2 | | 860 | ∼ | | ∼ | | 540 | 490 | ∼ |
| Comp. Ex. 3 | | 835-847 | ∼ | | 626∼639 | | 385∼395 | 310∼346 | ∼ |

**Table 2 unit: wt%)**

| | C | Si | Mn | Cr | Nb | Ti | Al | N |
|---|---|---|---|---|---|---|---|---|
| Ex. 1 | 0.18 | 1.7 | 1.6 | - | - | - | 0.04 | 0.003 |
| Ex. 2 | 0.20 | 1.5 | 1.7 | - | - | - | 0.03 | 0.005 |
| Ex. 3 | 0.21 | 1.2 | 1.7 | - | - | - | 0.02 | 0.007 |
| Ex. 4 | 0.19 | 1.3 | 1.8 | - | - | - | 0.05 | 0.005 |
| Ex. 5 | 0.17 | 1.4 | 2.1 | - | - | - | 0.03 | 0.008 |
| Comp. Ex. 1 | 0.2 | 1.4 | 1.8 | - | - | - | 0.04 | 0.005 |
| Comp. Ex. 2 | 0.08 | 1.5 | 1.4 | - | - | - | 0.03 | 0.003 |
| Comp. Ex. 3 | 0.1 | 0.1 | 1.4 | 0.3 | 0 | 0.03 | 0.02 | 0.002 |

### Testing of performances:

The hot-dip galvanized steel plates obtained according to Examples 1-5 and Comparative Examples 1-3 in present disclosure were tested for their performances. The performances tested for Examples 1-5 include the phase proportion of each phase in the microstructure, the mechanical properties (yield strength, tensile strength, elongation, hole expansion ratio), the statistical stored dislocation density, the hardness of each phase in the microstructure and the bonding strength of the zinc layer. The performances tested for Comparative Examples 1-3 include the mechanical properties. The statistical stored dislocation density, the hardness of each phase in the microstructure and the bonding strength of the zinc layer were tested for Comparative Example 1.

For the method for testing the mechanical properties, the American Society for Testing and Materials Standard ASTM E8/E8M-13 "Standard Test Methods For Tension Testing of Metallic Materials" was referred to. Tensile samples having the ASTM standard 50mm gauge length were used for the tensile tests, wherein the stretching direction was perpendicular to the rolling direction.

For the method for testing the statistical stored dislocation density, Y. Zhong, F. Yin, T. Sakaguchi, K. Nagai, K. Yang, Dislocation structure evolution and characterization in the compression deformed Mn-Cu alloy, Acta Materialia, Volume 55, Issue 8, 2007, pages 2747-2756 was referred to. Specifically, a 10×20 mm sample was cut from a steel plate. After surface polishing, the XRD (X-ray diffraction) pattern was measured. The MWAA (Modified Warren-Averbach Analysis) method was used to conduct a full spectrum fitting and calculations on the pattern to obtain a statistical stored dislocation density value of the sample.

The method for testing the bonding strength of a zinc layer included: cutting a 300×70 mm sample from the steel plate, cold bending it to 180° on a bending machine with a bend diameter which was 3 times the plate thickness, adhering a transparent tape to the outside of a rinsed corner, and peeling the tape to observe if any peeled material was transferred to the tape. If no peeled material was found, the bonding strength of the zinc layer was determined to be qualified (OK); otherwise, it was determined to be unqualified (NG).

The phase proportion of each phase in the microstructure was detected using X-ray diffraction quantitative phase analysis.

Method for testing hardness: GB/T 4340.1-2012 Metallic Materials Vickers Hardness Test, Part 1: Test Method.

The test results are as follows. The test results of the phase proportions of the microstructures and the mechanical properties of Examples 1-5 and Comparative Examples 1-3 are shown in Table 3. The test results of the statistical stored dislocation densities, the microstructure hardness and the bonding strength of the zinc layers of Examples 1-5 and Comparative Example 1 are shown in Table 4.

**Table 3**

| | | Proportion of ferrite (%) | Proportion of partitioned martensite (%) | Proportion of metastable austenite (%) | Yield strength (MPa) | Tensile strength (MPa) | Elongation (%) (%) | Hole expansion ratio (%) |
|---|---|---|---|---|---|---|---|---|
| Ex. 1 | i | 31 | 52 | 17 | 477 | 753 | 32 | 54 |
| | ii | 37 | 46 | 17 | 416 | 792 | 32.6 | 37 |
| | iii | 45 | 44 | 11 | 428 | 780 | 26.9 | 41 |
| Ex. 2 | i | 48 | 42 | 10 | 416 | 775 | 25.1 | 39 |
| | ii | 36 | 49 | 15 | 468 | 806 | 30.9 | 46 |
| | iii | 32 | 55 | 13 | 527 | 840 | 28.4 | 53 |
| Ex. 3 | i | 41 | 47 | 12 | 475 | 824 | 27.5 | 45 |
| | ii | 30 | 60 | 10 | 598 | 889 | 25.1 | 60 |
| | iii | 39 | 50 | 11 | 473 | 813 | 26.8 | 46 |
| Ex. 4 | i | 46 | 42 | 12 | 409 | 787 | 27.3 | 36 |
| | ii | 50 | 40 | 10 | 406 | 761 | 26.8 | 38 |
| | iii | 47 | 41 | 12 | 409 | 732 | 28.5 | 42 |
| Ex. 5 | i | 37 | 48 | 15 | 468 | 787 | 30.4 | 48 |
| | ii | 43 | 42 | 15 | 403 | 770.5 | 30.8 | 37 |
| | iii | 40 | 40 | 20 | 401 | 780 | 34 | 35 |
| Comp. Ex. 1 | | ∼ | ∼ | ∼ | 420 | 890 | 22 | 15 |
| Comp. Ex. 2 | | ∼ | ∼ | ∼ | ∼ | 597 | 32.2 | 51 |
| Comp. Ex. 3 | | ∼ | ∼ | ∼ | 375 | 630 | 25 | 46 |

**Table 4**

| | | Statistical stored dislocation density (10¹³/m²) | Ferrite hardness HV_{F} | Partitioned martensite hardness HV_{M} | HV_{M}/HV_{F} | Bonding strength of zinc layer |
|---|---|---|---|---|---|---|
| Ex. 1 | i | 5.2 | 228 | 333 | 1.46 | OK |
| | ii | 8.1 | 199 | 354 | 1.78 | OK |
| | iii | 8.7 | 193 | 345 | 1.79 | OK |
| Ex. 2 | i | 7.8 | 202 | 339 | 1.68 | OK |
| | ii | 7.7 | 203 | 353 | 1.74 | OK |
| | iii | 6.3 | 217 | 335 | 1.54 | OK |
| Ex. 3 | i | 7.9 | 201 | 355 | 1.77 | OK |
| | ii | 5 | 230 | 319 | 1.39 | OK |
| | iii | 7.7 | 203 | 353 | 1.74 | OK |
| Ex. 4 | i | 6.6 | 214 | 376 | 1.76 | OK |
| | ii | 8.2 | 198 | 351 | 1.77 | OK |
| | iii | 8.4 | 196 | 341 | 1.74 | OK |
| Ex. 5 | i | 7.3 | 207 | 348 | 1.68 | OK |
| | ii | 9.5 | 185 | 325 | 1.76 | OK |
| | iii | 9.9 | 181 | 318 | 1.76 | OK |
| Comp. Ex. 1 | | 12 | 173 | 392 | 2.27 | NG |

As it can be seen from Table 3, in the hot-dip galvanized steel plates provided in Examples 1-5 of the present disclosure, by volume fraction, the phase proportion of ferrite was 30 to 50%; the phase proportion of partitioned martensite was 40 to 60 %; and the phase proportion of metastable austenite was 10 to 20%. In terms of mechanical properties, the yield strength was 400 to 600 MPa; the tensile strength was 730 to 900 MPa; the elongation (ASTM50mm) was 25 to 35%; and the hole expansion ratio was 35 to 60%. The resulting products were ultra-high strength hot-dip galvanized products having a high hole expansion ratio, a high tensile strength and high formability. In Comparative Example 1, due to the high Si and Mn contents, the hot-dip galvanized product obtained was a high-strength hot-dip galvanized product in view of its yield strength and tensile strength. However, its elongation and hole expansion ratio were low, and thus it suffered from poor local formability. In Comparative Examples 2 and 3, the Si and Mn contents were reduced. The elongation and hole expansion ratio of the hot-dip galvanized products obtained were high, but the yield strength and tensile strength were low. So, they were not high-strength hot-dip galvanized products. It has been demonstrated that the hot-dip galvanized product manufactured according to the present disclosure has the advantages of high strength and superior local formability.

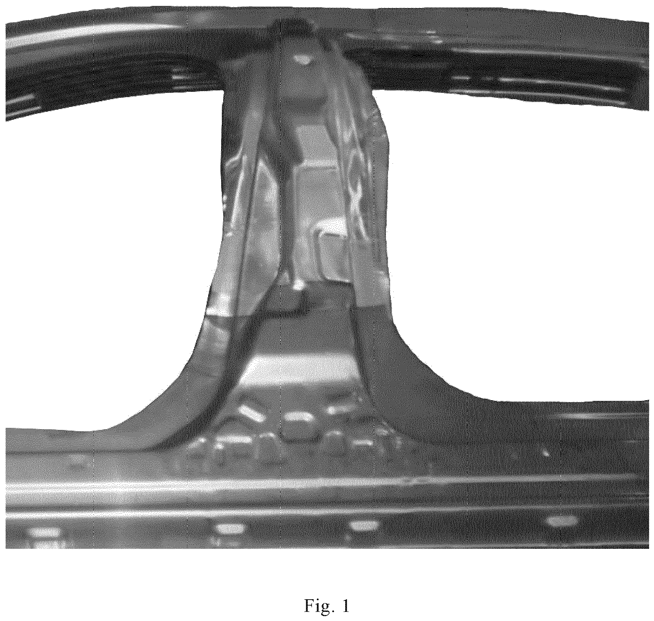

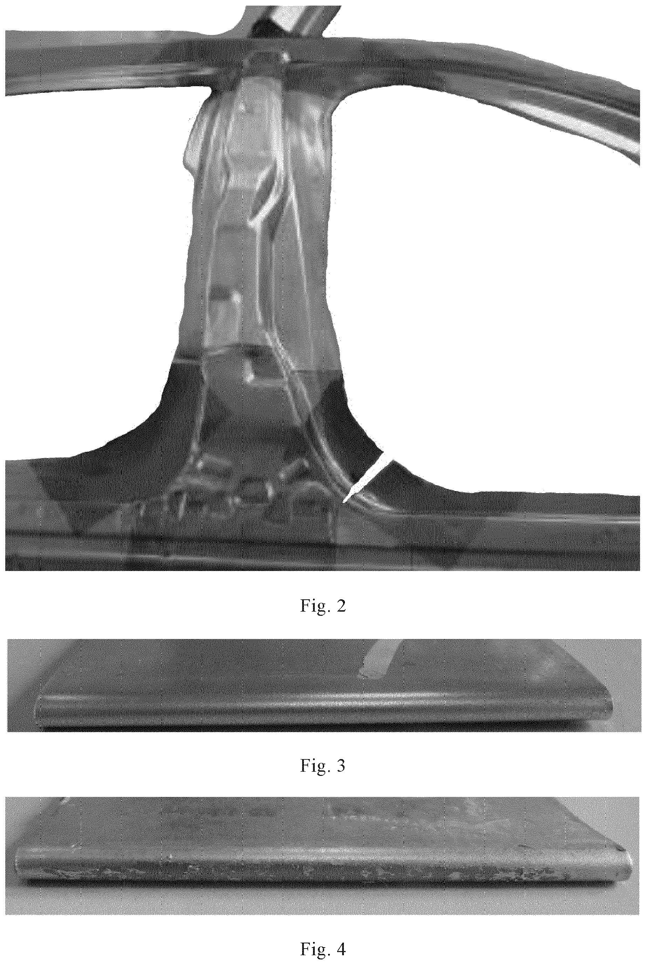

Fig. 1 shows the result of flanging the hot-dip galvanized steel plate product manufactured in Example 1 of the present disclosure. Fig. 2 shows the result of flanging the hot-dip galvanized steel plate product manufactured in Comparative Example 1. It can be seen that the product of Comparative Example 1 cracked at the flanging position, but the product of Example 1 didn't crack, indicating that the flanging performance of the hot-dip galvanized steel plate product manufactured by the present disclosure is significantly improved, and the overall forming performance remains at a high level. Cracking during flanging can be effectively avoided for the same parts.

As it can be seen from Table 4, for the hot-dip galvanized steel plates provided in Examples 1-5 of the present disclosure, the statistical storage dislocation density of ferrite was in the range of 5.0×10¹³/m² to 1×10¹⁴/m²; the hardness of ferrite was in the range of 180 to 230 HV; and the hardness of partitioned martensite was in the range 315 to 380 HV. The hardness ratio of partitioned martensite to ferrite was ≤1.8. For Comparative Example 1, the statistical stored dislocation density of ferrite was greater than the upper limit required by the present disclosure, and the hardness ratio of partitioned martensite to ferrite was >1.8. The products obtained in the Examples of the present disclosure had good plateability as indicated by the good plating layer quality. In contrast, the plating layer quality of the product obtained in Comparative Example 1 was poor. Fig. 3 shows the test result of the bonding strength of the zinc layer in Example 1 of the present disclosure, and Fig. 4 shows the test result of the bonding strength of the zinc layer in Comparative Example 1. As it can be seen, the quality and bonding strength of the plating layer of the high hole expansion ratio and ultra-high strength hot-dip galvanized steel plate of the present disclosure were improved significantly, and no peeling of the zinc layer occurred during the test.

The above content is a further detailed description of the present disclosure with reference to specific embodiments. It cannot be construed that the specific embodiments of the present disclosure are limited to this description. For one of ordinary skill in the technical field to which the present disclosure pertains, several simple deductions or substitutions can be made without departing from the concept of the present disclosure, and all of them should be regarded as falling in the protection scope of the present disclosure.

## Claims

1. A method of manufacturing a hot-dip galvanized steel plate, wherein the method includes the following steps:
S1: hot rolling a slab into a steel plate, coiling the steel plate, and then pickling and cold-rolling the steel plate;
S2: performing continuous annealing at an annealing temperature of 840 to 870 °C/s and an annealing dew point of -10 to 0 °C/s; cooling at a cooling rate of ≤10 °C/s to a starting temperature of rapid cooling of 710 to 730 °C/s; cooling at a cooling rate of ≥50 °C/s to an end temperature of the rapid cooling of 220 to 320 °C/s; heating to a reheating temperature of 410 to 460 °C/s; and holding for 20 to 100 s;
S3: performing galvanization, after which the steel plate is cooled to room temperature to obtain the hot-dip galvanized steel plate;
wherein the hot-dip galvanized steel plate consists of the following chemical elements by mass percentage: C: 0.17 to 0.21 wt%; Si: 1.2 to 1.7 wt%; Al: 0.02 to 0.05%; Mn: 1.60 to 2.1 wt%; N: ≤ 0.008 wt%; and a balance of Fe and unavoidable impurities.

2. The method of manufacturing a hot-dip galvanized steel plate according to claim 1, wherein the hot-dip galvanized steel plate has a microstructure consisting of ferrite, partitioned martensite and metastable austenite; wherein, by volume fraction, the phase proportion of the ferrite is 30 to 50%; the phase proportion of the partitioned martensite is 40 to 60%; and the phase proportion of the metastable austenite is 10 to 20%.

3. The method of manufacturing a hot-dip galvanized steel plate according to claim 2, wherein the ferrite has a statistical stored dislocation of 5.0×10¹³/m² to 1×10¹⁴/m²; the ferrite has a hardness of 180 to 230 HV; the partitioned martensite has a hardness of 315 to 380 HV, preferably 320 to 380 HV; and a hardness ratio of the partitioned martensite to the ferrite is ≤1.8.

4. The method of manufacturing a hot-dip galvanized steel plate according to claim 3, wherein the hot-dip galvanized steel plate has a yield strength of 400 to 600 MPa, a tensile strength of 730 to 900 MPa, preferably 780 to 900 MPa, an elongation of 25 to 35%, and a hole expansion ratio of 35 to 60%.

5. The method of manufacturing a hot-dip galvanized steel plate according to any one of claims 1-4, wherein in step S1, before the hot rolling, the slab is heated and held at a temperature of 1230 to 1260°C.

6. The method of manufacturing a hot-dip galvanized steel plate according to any one of claims 1-5, wherein in step S1, a finish rolling temperature of the hot rolling is 920±30 °C.

7. The method of manufacturing a hot-dip galvanized steel plate according to any one of claims 1-6, wherein in step S1, a temperature for the coiling is 450 to 550 °C; during the cold rolling, a cold-rolling deformation amount is 20 to 60%.

8. The method of manufacturing a hot-dip galvanized steel plate according to claim 1, wherein in step S2, the steel plate is cooled at a cooling rate of 2 to 10 °C/s to the starting temperature of the rapid cooling of 710 to 730 °C.

9. The method of manufacturing a hot-dip galvanized steel plate according to claim 1, wherein in step S2, the steel plate is cooled at a cooling rate of 50 to 100 °C/s from the starting temperature of the rapid cooling to the end temperature of the rapid cooling of 220 to 320 °C.

10. The method of manufacturing a hot-dip galvanized steel plate according to claim 3, wherein the hardness ratio of the partitioned martensite to the ferrite is 1.4 to 1.8.

11. A hot-dip galvanized steel plate, wherein the hot-dip galvanized steel plate consists of the following chemical elements by mass percentage: C: 0.17 to 0.21 wt%; Si: 1.2 to 1.7 wt%; Al: 0.02 to 0.05%; Mn: 1.60 to 2.1 wt%; N: ≤ 0.008 wt%; and a balance of Fe and unavoidable impurities, wherein the hot-dip galvanized steel plate has a microstructure consisting of ferrite, partitioned martensite and metastable austenite; wherein, by volume fraction, the phase proportion of the ferrite is 30 to 50%; the phase proportion of the partitioned martensite is 40 to 60%; and the phase proportion of the metastable austenite is 10 to 20%.

12. The hot-dip galvanized steel plate according to claim 11, wherein the ferrite has a statistical stored dislocation of 5.0×10¹³/m² to 1×10¹⁴/m²; the ferrite has a hardness of 180 to 230 HV; the partitioned martensite has a hardness of 315 to 380 HV, preferably 320 to 380 HV; and a hardness ratio of the partitioned martensite to the ferrite is ≤1.8.

13. The hot-dip galvanized steel plate according to claim 13, wherein the hot-dip galvanized steel plate has a yield strength of 400 to 600 MPa, a tensile strength of 730 to 900 MPa, preferably 780 to 900 MPa, an elongation of 25 to 35%, and a hole expansion ratio of 35 to 60%.

14. The hot-dip galvanized steel plate according to claim 12, wherein the hardness ratio of the partitioned martensite to the ferrite is 1.4 to 1.8.

15. The hot-dip galvanized steel plate according to any one of claims 11-14, wherein the hot-dip galvanized steel plate is manufactured by the method of manufacturing a hot-dip galvanized steel plate according to any one of claims 1 and 5-9.
